# EUROPEAN PATENT APPLICATION

(11) **EP 4 369 118 A1**
(43) Date of publication of application: **15.05.2024**
(21) Application number: 22836418.8
(22) Date of filing: 05.07.2022
(51) Int. Cl.: G05B 19/042, B09B 3/00

(54) **DEVICE FOR PROCESSING FOOD WASTE AND METHOD FOR OPERATING A DEVICE FOR PROCESSING FOOD WASTE**

(30) Priority: 05.07.2021 BR 102021013275
(71) Applicant: Eco Circuito Importação E Comercio De Equipamentos LTDA - EPP, 01032-901 São Paulo (BR)
(72) Inventor: PRATES FILHO, José Eduardo, 04533-000 São Paulo (BR)
(74) Representative: Clarke, Modet y Cía., S.L.
(86) International application number: PCT/BR2022/050248
(87) International publication number: WO 2023/279181

(57) **Abstract**

Food residues processing equipment is disclosed, which, in addition to comprising components and systems essential to its fundamental operation, further comprises a classification list of food residues accessible and selectable by means of the interface. A method of operating food residues processing equipment is also disclosed that, based on the concept of "machine learning", determines the main functional parameters of said equipment based on the classification of the food residues to be digested and historical data of "target parameters" applied in highly energy efficient operations.

## Description

### FIELD OF THE INVENTION

The invention in question refers to a food residues processing equipment and, more particularly, to a food residues processing equipment that, capable of operating on an industrial scale, has its operation guided by input variables and by "machine learning", preferably using the concept of "reinforcement learning".

The invention in question also refers to the operating method of the food residues processing equipment, whose premise is to optimize the operating variables of the equipment based on variables related to food residues.

### BACKGROUNDS OF THE INVENTION

With regard to the food residues processing equipment, the current state of the art is fundamentally integrated by two isolated and non-interdependent technological fields.

The first technological field is integrated by food residues processing equipment known as mechanical biodigesters.

As technicians skilled in the subject know, the mechanical biodigesters fundamentally comprise equipment integrated by a "digestion" chamber, by a mixing mechanism, by a means of supplying water, by a means of heating water and by an air supply means.

Generally speaking, food residues are often disposed of in the digestion chamber in order to renew the biological activity of decomposition. The "digestion" process is continuous, being made possible by the constant accumulation of a mass of food residues and the constant automatic disposal of the "digested" material. After each disposal, the mixing mechanism is activated so that new residues mix with old residues, increasing the exposure of the new materials to the microorganisms existing in the "digestion" chamber. Simultaneously with the activation of the mixing mechanism, water at a controlled and pre-defined temperature irrigates the residues mass to maintain the internal temperature of the process, promoting homogenization of the mixture. After the mixing period, the mixing mechanism and water irrigation are deactivated so that the biological activity of decomposition performs the function of "digesting the residues". The air supply means is constantly activated so that the residues mass remains oxygenated, thus avoiding the generation of odors, normally caused by the absence of oxygen. The "digestion" chamber further comprises, in its lower portion, a fine mesh sieve, with all "digested" material decanting and passing through the sieve, being then accumulated in a retention chute whose outlet is controlled by a discharge valve to dispose of the liquid extracted from the process.

Examples of mechanical biodigesters are described in patent documents WO2015199885 and US9977414.

Patent document WO2015199885 basically describes a food residues processing station integrated by a storage tank, a water inlet and a mixer with food residues disposed in the storage tank. The food residues processing station further comprises a scale capable of detecting the weight of the food residues before they are mixed, a controller connected to and in communication with the scale, and a remote module that is in communication with the controller and capable of calculating, based on the detected weight, a total amount of food residues mixed and received by the storage tank over a predetermined time.

Patent document US9977414 basically describes food residues elimination equipment that, in addition to the trivial components (mixer, scale, among others), is further integrated by a microprocessor and a data communication connection with an analytical cloud. This connection allows the equipment to transmit a status code (success or failure, basically) and amount of garbage to centralized databases that can provide reports to an end user.

The second technological field refers to computational equipment intended for measuring or monitoring the food waste. In general terms, this technological field is integrated by computational equipment that, never related to machines capable of "digesting" food residues, aims at generating statistical data regarding the misuse of food resources. Patent documents BR1120160243005 and US7415375 describe examples of technical solutions belonging to this second technological field.

Patent document BR1120160243005 describes equipment for monitoring food waste integrated by a weighing mechanism configured to weigh a receptacle of food waste from a plurality of consecutive disposal events before emptying, a processor configured to measure the weight difference of the waste receptacle between each disposal event and calculating the weight of a disposal event based on the difference, and a user interface configured to receive at least one indication categorizing the food waste in a disposal event performed by a user. A central server is further provided for, configured to receive weights and categorizations of disposal events from a plurality of locations. Such an embodiment makes it possible to implement a food waste monitoring method whereby the difference between a first waste weight after a first disposal event and a second weight after a second disposal event is associated with a user input to categorize the food waste of the second disposal event.

Patent document US7415375 describes food residues monitoring equipment coupled to an electronic scale for weighing food residues, wherein the monitoring device can capture and record the weight of the food residues, as well as related information (such as the type of wasted food, the reason why the food became wasted) to generate administrative information such as, for example, a report summarizing the monetary value of the food residues generated over a time interval.

Although these two technological fields comprise reasonably efficient technical solutions, it is notable to observe the impossibility of cooperation therebetween.

This means that, considering the existing functional and operational limitations, the current mechanical or electromechanical solutions aimed at eliminating food residues cannot be integrated with current computational equipment intended for measuring or monitoring the food waste. In the same sense, this also means that computational equipment intended for measuring or monitoring the food waste cannot be naturally implemented in the current mechanical or electromechanical solutions aimed at eliminating food residues.

The impossibility of integration between these two technological fields is due to the fact that mechanical or electromechanical solutions intended for the elimination of food residues do not allow the classification of food residues and the fact that computational equipment intended for measuring or monitoring food waste does not include proper means to "digest" food residues.

Consequently, the intelligent management (monitoring food residues and observing sanitary conditions for disposing of food residues) of an industrial kitchen or a busy restaurant, for example, requires that the food residues be first submitted to computational equipment intended for measuring or monitoring the food waste and, subsequently, to a mechanical or electromechanical solution designed to eliminate food residues. Evidently, the prolonged handling of this food residues is highly undesirable, operationally unfeasible due to the need for dedicated labor to carry out the process of control, classification and recording of information, and, in more serious cases, it can pose a health risk to the handling operators and/or risk to hygiene in industrial kitchens or busy restaurants. It is based on this scenario that the invention in question arises.

### OBJECTIVES OF THE INVENTION

In view of the technical solutions belonging to the current state of the art and their limitations, it is the main objective of the invention in question to disclose an equipment (and its respective method of operation) for processing food residues integrated by, in a cooperative manner and integrated, a "digestion module", an "interface module", an "operation module", said "digestion module" being capable of "digesting" food residues, the "interface module" being capable of allowing the insertion of classificatory variables related to discarded food residues, and being the "operation module", local or remote, capable of controlling the operating variables of the "digestion module" based on the variables originating from the "interface module".

It is also one of the objectives of the invention in question that the food residues processing equipment disclosed herein further comprises a "remote analysis module" capable of providing and storing complementary information about food residues from the combination between variables originating from the "interface module", output data from the "operation module" and complementary information assigned by managers of industrial kitchens or busy restaurants.

Additionally, it is also one of the objectives of the invention in question to optimize the residue management and, more particularly, to optimize the elimination of food residues arising from the disposal of meals produced on an industrial scale (in industrial kitchens and busy restaurants, for example) by means of the implementation of "machine learning" methods in the "digestion module" of the food residues processing equipment disclosed herein. In this context, it is one of the objectives of the invention in question that the management and elimination of food residues arising from the disposal of meals produced on an industrial scale becomes more efficient through the "operation module", which is capable of controlling the operating variables of the "digestion module" based on the variables originating from the "interface module".

### SUMMARY OF THE INVENTION

All of the aforementioned objectives are fully achieved by means of the food residues processing equipment, which comprises at least one digestion chamber accessible through at least one opening cooperating with at least one door, at least one mixing shaft integrated by multiple mixing blades and driven by at least one electric motor cooperating with at least one transmission mechanism, at least one water inlet control means cooperating with at least one water inlet route, at least one water heating means cooperating with at least one water distribution means, at least one load measurement sensor associated with the chassis of the food residues processing equipment, at least one data processing unit comprising at least one data processing core, at least one memory unit, at least one signal input port, and at least one signal output port, and at least one network connection unit, and at least one water temperature sensor.

According to the invention in question, the cooperation between the opening and the door of the digestion chamber is monitored by at least one door sensor.

According to the invention in question, said mixing shaft integrated by multiple mixing paddles is arranged inside the digestion chamber.

According to the invention in question, the water distribution means is capable of introducing heated water into the digestion chamber.

According to the invention in question, the data processing unit is capable of sending drive signals to the electric motor, the water inlet control means and the water heating means, and capable of receiving response signals from the door sensor, load measurement sensor, interface and from the water temperature sensor.

One of the great merits of the invention in question remains in the fact that said food residues processing equipment further comprises at least one classification list of food residues stored in the data processing unit and accessible and selectable by means of the interface.

In this way, the data processing unit determines at least one of the functional parameters of the electric motor, at least one of the functional parameters of the water inlet control means and at least one of the functional parameters of the water heating means based on the combination of at least the response signals of the load measurement sensor and the classification selection of food residues from the classification list of food residues stored in the data processing unit selected by at least one user by means of the interface.

All of the aforementioned objectives are also achieved by means of the method of operating food residues processing equipment, which is especially applicable to the food residues processing equipment as defined above.

According to the invention in question, the data processing unit sends at least one control signal to the electric motor based on the classification of the food residues to be digested and based on the history of **"target times" of driving the electric motor** for classifying the food residues to be digested, the data processing unit sends at least one control signal to the water inlet control means based on the classification of the food residues to be digested and based on the history of "target times" of water intake controlled by the water inlet control means, and the data processing unit sends at least one control signal to the water heating means based on the classification of the food residues to be digested based on the history of "target temperatures" of the water controlled by the water heating means.

Still in accordance with the invention in question, the classification list of food residues stored in the data processing unit further comprises, in a relational way, the history of **"target times" of driving the electric motor,** the history of "target times" of water intake controlled by the water inlet control means and the history of "target temperatures" of the water controlled by the water heating means for each type or group of food residues.

### BRIEF DESCRIPTION OF THE FIGURES

The food residues processing equipment and the operation method of food residues processing equipment are best understood by means of the figures listed below, in which:
- figure 1 schematically illustrates the food residues processing equipment according to the invention in question; and
- figures 2, 3 and 4 illustrate, schematically, the main components that integrate the food residues processing equipment according to the invention in question.

### DETAILED DESCRIPTION OF THE INVENTION

Preliminarily, it should be highlighted that the invention encompasses two objects that, although interdependent, can be individually analyzed.

In this sense, the first object of the invention in question is a food residues processing equipment, and the second object of the invention in question is the method of operating food residues processing equipment.

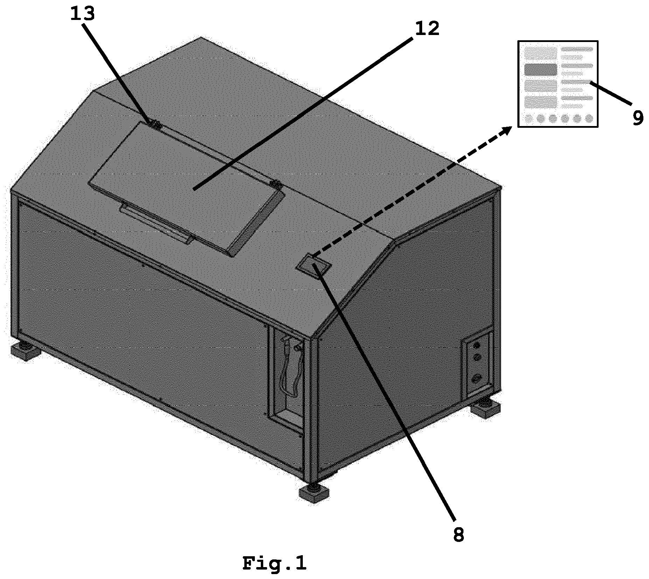

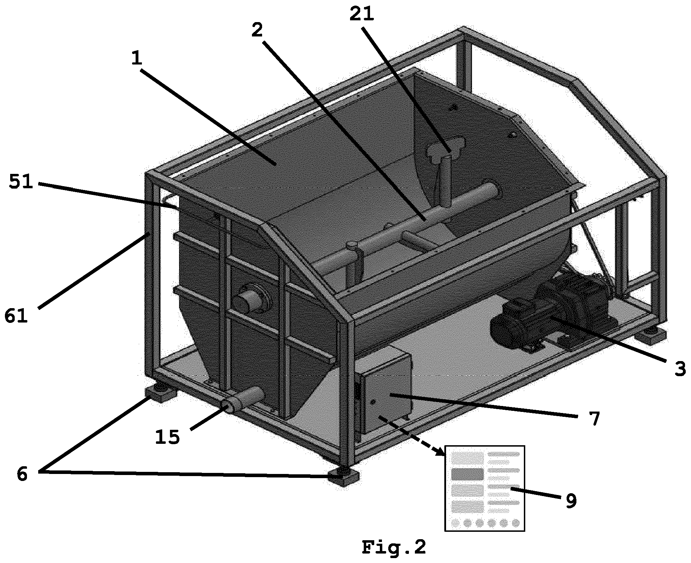

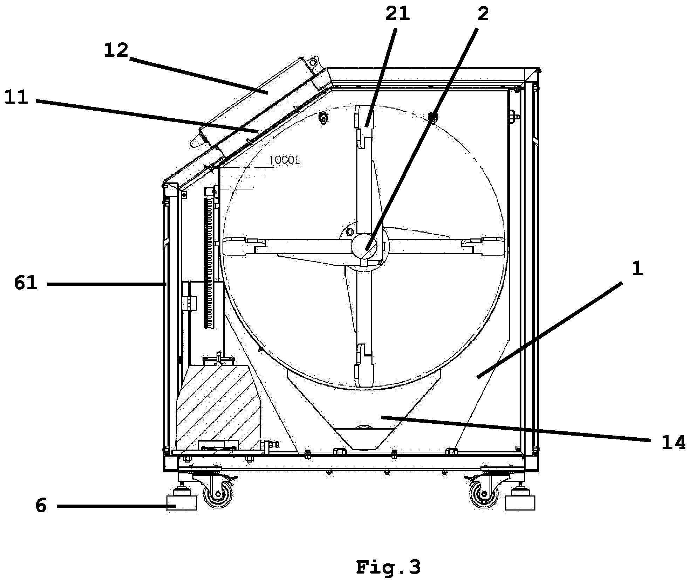

As schematically illustrated in figures 1, 2, 3 and 4, said food residues processing equipment (which can also be referred to as a biodigester or mechanical digester, these two nomenclatures being widely used in the consumer market of this type of equipment) comprises, in its preferred embodiment, a digestion chamber **1,** a mixing shaft **2** integrated by multiple mixing blades **21,** a water inlet control means **4,** a water heating means **5,** four load measurement sensors **6,** a data processing unit **7,** and water temperature sensors **10.**

It is worth highlighting that, as it is electromechanical equipment, the food residues processing equipment is powered by electrical energy from an external source.

Evidently, the preferred embodiment of the food residues processing equipment, according to the invention in question, may include other components and subsystems that are common and widely known to those skilled in the subject.

Still according to the preferred embodiment of the invention in question, the digestion chamber **1,** arranged inside the area defined by the chassis **61** of the food residues processing equipment, is closed and accessible through an opening **11,** which is cooperative with a door **12.** It is important to highlight that, preferably, the cooperation between the opening **11** and the door **12** is monitored by a door sensor **13,** which may comprise a magnetic sensor or equivalent.

The aforementioned mixing shaft **2** integrated by multiple mixing blades **21** is arranged inside the digestion chamber (1), and is driven by an electric motor (3) cooperating with at least one transmission mechanism (31). This means that the rotational movement of the mixing blades **21,** inside the digestion chamber (1), is driven by the movement of the rotating axis of the electric motor 3, and, wherein, according to the preferred embodiment of the invention in question, the aforementioned transmission mechanism (31) comprises any known type of rotary movement transmission means capable of associating the rotating shaft of the electric motor **3** with the mixing shaft **2.**

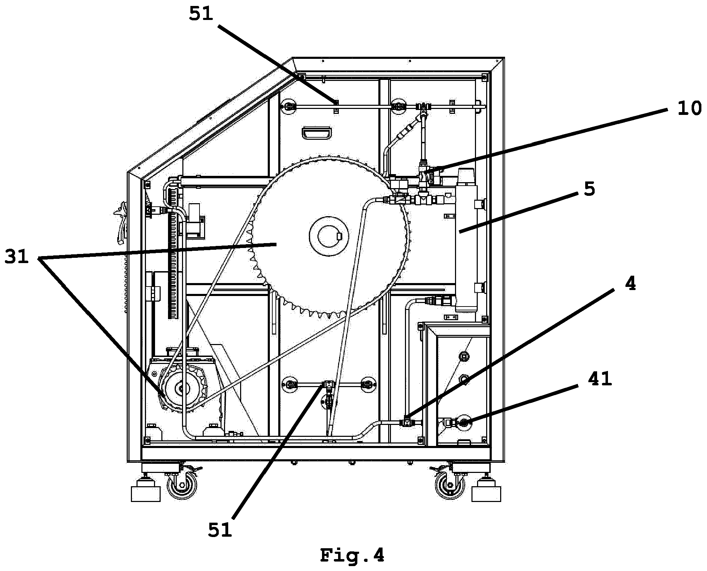

As best illustrated in figure 4, the water inlet control means **4** comprises a valve that, electrically controlled, is cooperative with at least one water inlet route **41.** Preferably, said water inlet control means **4** comprises a solenoid valve.

Furthermore, as better illustrated in figure 4, the water heating means **5** comprises a heaterthat, electrically controlled, is cooperative with, at least, a water distribution means **51** and is capable of introducing heated water into the interior of the digestion chamber **1.** Preferably, said water heating means **5** comprises a resistive heater or a gas heater, and the water distribution means **51** comprises a pipe having at least one water outlet directed into the interior of the digestion chamber **1.**

According to the preferred embodiment of the invention in question, four load measurement sensors **6** are provided for associated with the chassis **61** of the food residues processing equipment. Preferably, but not limited to, the load measurement sensors **6** comprise load cells.

Also, according to the preferred embodiment of the invention in question, the water temperature sensors **10** comprise temperature sensors that, arranged in at least one heated water circulation point (preferably, close to the hot water outlets of the water distribution means **51**), are capable of converting the measured temperature information into relational electronic signals, as is the case with thermocouple-type temperature sensors.

The data processing unit **7,** according to the preferred embodiment of the invention in question, is provided with a data processing core, a memory unit, a signal input port, a signal output port and a network connection unit. In general terms, said data processing unit **7** comprises a microcomputer or a microcontroller of the type used in electromechanical industrial equipment.

In general terms, said data processing unit **7** is capable of sending drive signals to the electric motor **3,** the water inlet control means **4** and the water heating means **5,** and capable of receiving signals response from the door sensor **13,** the load measurement sensor **6,** the interface **8** and the water temperature sensor **10.**

As can be seen, all the elements mentioned and detailed above comprise, in one way or another, elements already known and already observed in traditional mechanical digesters and belonging to the current state of the art. Thus, it is highlighted that the great inventive merit of the first object of the invention in question lies in the fact that the food residues processing equipment disclosed herein further comprises an interface **8** operable by a user, which is capable of displaying, in addition of general information on the operation of said food residues processing equipment, a classification list **9** of food residues stored in the data processing unit **7.** Evidently, the user-operable interface **8,** in addition to displaying said classification list **9** of food residues, further allows users to select items from this classified list **9.**

In this way, it can be stated that, even if in an intangible form, the food residues processing equipment, according to the first inventive core of the invention in question, comprises a classification list **9** of food residues stored in the data processing unit **7,** which is accessible and selectable by means of the interface **8.** Thus, depending on all the features and elements previously described, the data processing unit **7** becomes capable of determining at least one of the functional parameters of the electric motor **3,** at least one of the functional parameters of the water inlet control means **4** and at least one of the functional parameters of the water heating means **5** based on the combination of at least the response signals of the load measurement sensor **6** and the classification selection of food residues from the classification list **9** of food residues stored in the data processing unit **7** selected by at least one user by means of the interface **8.**

According to the preferred embodiment of the invention in question, the classification list **9** of food residues stored in the data processing unit **7** originates from an external server, being transmitted to the data processing unit **7** by means of its network connection unit, or even by any other means of transferring digital files, such as, for example, the transfer by means of a USB memory device. This allows qualified users to update the classification list **9** of food residues whenever necessary.

It is further important to highlight that, although possibly coming from an external source, the aforementioned classification list **9** of food residues should, preferably, always be stored on the memory unit of the data processing unit **7** so that the food residues processing equipment can safely operate even when disconnected from external networks.

The main objective to be achieved by the food residues processing equipment, as previously described and in accordance with this first inventive core, is to link the main operational variables (functional parameters of the electric motor **3,** functional parameters of the water inlet control means **4** and functional parameters of the water heating means **5**) of the biodigester process to the "input variables" of the food residues.

As a result of this link, the data processing unit **7** becomes capable of changing said operational variables according to more specific data (selection according to the classification list **9** of food residues and weight of the classified food residues). With this, firstly, excellent energy efficiency is achieved, after all, the electrical energy spent on the main operational variables starts to be optimized depending on the specific operation adopted based on the "input variables" of the food residues.

Secondly, excellent efficiency in the water use is also achieved, after all, the amount of water used also starts to be optimized depending on the specific operation adopted based on the "input variables" of the food residues.

This means that, and according to this inventive core, the food residues processing equipment tends to spend less electrical energy to, for example, perform the mechanical digestion of breakfast disposals than the mechanical digestion of lunch disposals. This result is only possible by using the classification of food residues as "input variables".

In this way, at least one of the functional parameters of the electric motor **3** is determined by the data processing unit **7** by means of the combination between the difference between the initial weight and the final weight measured by the load measurement sensors **6** and the at least one classification selection of food residues from the classification list **9** selected by at least one user by means of the interface **8.**

In this same sense, due to the fact that at least one of the functional parameters of the water inlet control means **4** is determined by the data processing unit **7** by means of the combination between the difference between the initial weight and the final weight measured by the load measurement sensors **6** and at least one classification selection of food residues from the classification list **9** selected by at least one user by means of the interface **8.**

Furthermore, at least one of the functional parameters of the water heating means **5** is determined by the data processing unit **7** by means of the combination between the difference between the initial weight and the final weight measured by the load measurement sensors **6** and at least one classification selection of food residues from the classification list **9** selected by at least one user by means of the interface **8.**

For the purposes of descriptive sufficiency, it is highlighted that, preferably (and not limitingly), the main functional parameter of the electric motor **3** to be determined by the data processing unit **7** (by means of the combination between the difference between the initial weight and the final weight measured by the load measurement sensor **6** and at least one classification selection of food residues from the classification list **9** selected by at least one user by means of the interface **8**) is the operation time parameter.

In this same sense, the main functional parameter of the water inlet control means **4** to be determined by the data processing unit **7** (by means of the combination between the difference between the initial weight and the final weight measured by the load measurement sensor **6** and at least one classification selection of food residues from the classification list **9** selected by at least one user by means of the interface **8**) is the water intake time.

Furthermore, the main functional parameter of the water heating means **5** to be determined by the data processing unit **7** (by means of the combination between the difference between the initial weight and the final weight measured by the load measurement sensor **6** and at least one classification selection of food residues from the classification list **9** selected by at least one user by means of the interface **8**) is water temperature.

As mentioned previously, the functional parameters of the electric motor **3,** the functional parameters of the water inlet control means **4** and the functional parameters of the water heating means **5** are determined by the data processing unit **7** seeking the optimization of the difference between the initial weight of food residues and the final weight of food residues measured by the load measurement sensor **6.**

The optimization of the aforementioned difference between the initial weight of food residues and the final weight of food residues, which can also be called "mechanical digestion rate", is always the indicator of operational efficiency (which includes the efficiency in electrical energy consumption and water use) of a mechanical digestion process. Therefore, it is a measurable parameter. Of course, optimizing the difference between the initial weight of food residues and the final weight of food residues is also the energy optimization of this process.

Thus, the constant search for this optimization (optimization of the "mechanical digestion rate" and energy efficiency) is related to determining the best "target time" of driving the electric motor **3,** the best "target time" of intake of water controlled by the water inlet control means **4** and the "target temperature" of the water controlled by the water heating means **5,** after all, it is these three variables that have the greatest energy use in a mechanical digestion process.

Therefore, in a first mode of operation of the food residues processing equipment, the **"target times" of driving the electric motor 3,** the **"target times" of water intake** controlled by the water inlet control means water **4** and the "target temperature" of the water controlled by the water heating means **5** may be stored, in a relational way with the combination between the difference between the initial weight and the final weight measured by the load measurement sensors **6** and at least one classification selection of food residues from the classification list **9** selected by at least one user by means of the interface **8,** on the memory unit of the data processing unit **7.**

In this first mode of operation, a determined numerical range of the "weighing result" (difference between the initial weight and the final weight measured by the load measurement sensors **6**) combined with a determined classification of food residues is related to determined **"target times" of driving the electric motor 3,** "target times" of water intake controlled by the water inlet control means **4** and "target temperature" of the water controlled by the water heating means **5.**

Example 1: **twenty kilograms** of food residues from **bread** are related to **fifteen minutes** of electric motor driving, **five minutes** of water intake and water temperature at **fifty degrees Celsius.**

Example 2: **two hundred kilograms** of food residues from **bread** are related to **two hours** of electric motor driving, **five minutes** of water intake and water temperature at **fifty degrees Celsius.**

Example 3: **twenty kilograms** of food residues from **meat** are related to **fifty minutes** of electric motor driving, **twenty minutes** of water intake and water temperature at **two hundred degrees Celsius.**

In this first mode of operation, this relation (relational table) between a determined numerical range of the "weighing result" (difference between the initial weight and the final weight measured by the load measurement sensors **6**) combined with a determined classification of food residues and determined **"target times" of driving the electric motor 3,** "target times" of water intake controlled by the water inlet control means **4** and "target temperature" of the water controlled by the water heating means **5** is static.

In a second mode of operation of the food residues processing equipment, the concept of "machine learning" is introduced to the relation between numerical ranges of the "weighing result" (difference between the initial weight and the final weight measured by the load measurement sensors **6**) combined with classifications of food residues and **"target times" of driving the electric motor 3, "target times" of water intake** controlled by the water inlet control means **4** and "target temperature" of the water controlled by water heating means **5.** Preferably, there is used the concept of "reinforcement learning".

And it is in this second mode of operation of the food residues processing equipment that the second object of the invention resides, as well as the second inventive core, which refers to a method of operating food residues processing equipment, and, more particularly, to the method of operating of the food residues processing equipment previously described and detailed above.

The main objective of this second inventive core refers, in a very particular way, to the application of the concept of "machine learning" to carry out the automatic adjustment of the previously mentioned operational variables, aiming at achieving the best rate of efficiency of mechanic digestion based on histories of previously executed processes. With this, there is achieved the lowest use of water and energy resources, as well as less manual intervention when adjusting operational variables.

To this end, according to the method of operating food residues processing equipment, second object of the invention in question, the data processing unit **7** sends at least one control signal to the electric motor **3** based on the classification of the food residues to be digested and based on the history of "target times" of driving the electric motor **3** for the classification of the food residues to be digested, at least one control signal to the water inlet control means **4** based on the classification of the food residues to be digested and based on the history of **"target times" of water intake** controlled by the water inlet control means **4** and at least one control signal to the water heating means **5** based on the classification of the food residues to be digested based on the history of "target temperatures" of the water controlled by the water heating means **5.**

Additionally, the data processing unit **7** further updates the relational histories present in the classification list **9** of food residues, so that:
- the history of **"target times" of driving the electric motor 3** is always updated with the current time of driving of the electric motor **3** from the detection of the optimization of the difference between the initial weight of food residues and the final weight of food residues to be digested. This update is performed locally and on at least one external server;
- the history of "target times" of water intake controlled by the water inlet control means **4** is always updated with the current driving time of the water inlet control means **4** from the detection of the optimization of the difference between the initial weight of food residues and the final weight of food residues to be digested. This update is performed locally and on at least one external server;
- the history of "target temperatures" of the water controlled by the water heating means **5** is always updated with the current temperature of the water controlled by the water heating means **5** from the detection of the optimization of the difference between the initial weight of food residues and the final weight of food residues to be digested. This update is performed locally and on at least one external server.

Given that these updates are exported to external servers, it is possible and preferred that the data processing unit **7,** before sending control signals to the electric motor **3,** the water inlet control means **4** and the water heating means **5,** searches, on external servers, for updates to the history of **"target times" of driving the electric motor 3,** the history of "target times" of water intake controlled by the water inlet control means **4,** and the history of "target temperatures" of the water controlled by the water heating means **5.**

Still in relation to these updates, it is important to highlight that, as previously explained, the updates to the relational histories present in the classification list **9** of food residues are carried out whenever there is identified a current mechanical digestion rate (difference between the initial weight of food residues and the final weight of food residues) better than the predecessor mechanical digestion rate. This identification of mechanical digestion rate optimization (difference between the initial weight of food residues and the final weight of food residues) usually occurs when a mechanical digestion process "finishes" earlier than expected, that is, when a determined value referring to the difference between the initial weight of food residues and the final weight of food residues is reached earlier than expected.

In these situations, the update of relational histories present in the classification list **9** of food residues is automatically carried out on the memory unit of the data processing unit **7** and sent to an external server, so that all the food residues processing equipment connected to the same data network (which is also connected to the aforementioned external server) can benefit from this histories update.

With this, the operational efficiency achieved (sometimes by chance, sometimes forced, it is worth mentioning) in a single food residues processing equipment is replicated so that all the food residues processing equipment connected to the same data network also start to function with this operational efficiency.

Obviously, this search for updates can also be carried out in a "manual" way (via a user request by means of the interface **8**), or in an automated way, with a frequency also determined by the user (by means of the interface **8**).

It is further important to highlight that the food residues processing equipment disclosed herein can uninterruptedly operate (and usually does). In this way, whether in the first mode of operation or in the second mode of operation, the moment of the "beginning" of the operation, mainly for the purpose of measuring the initial weight (weight of the equipment) and the final weight (weight of the equipment with the addition of the new load of food residues inserted into the digestion chamber **1**), is determined by the closing of the door **12** of the digestion chamber **1** combined with the classification selection of food residues from the classification list **9** of residues carried out by a user by means of the interface **8.**

It is important to highlight that the above description has the sole purpose of describing, by way of example, the preferred embodiments of the objects of the invention in question. Therefore, it becomes clear that modifications, variations and constructive combinations of the elements that perform the same function in substantially the same way to achieve the same results, remain within the scope of protection delimited by the attached claims.

## Claims

1. A food residues processing equipment, comprising:
- at least one digestion chamber (1) accessible through at least one opening (11) cooperating with at least one door (12); the cooperation between the opening (11) and the door (12) being monitored by at least one door sensor (13);
- at least one mixing shaft (2) integrated by multiple mixing blades (21) and driven by at least one electric motor (3) cooperating with at least one transmission mechanism (31); said mixing shaft (2), integrated by multiple mixing blades (21), being arranged inside the digestion chamber (1);
- at least one water inlet control means (4) cooperating with at least one water inlet route (41);
- at least one water heating means (5) cooperating with at least one water distribution means (51); the water distribution means (51) being capable of introducing heated water into the digestion chamber (1);
- at least one load measurement sensor (6) associated with the chassis (61) of the food residues processing equipment;
- at least one data processing unit (7) comprising at least one data processing core, at least one memory unit, at least one signal input port, at least one signal output port and
- at least one network connection unit;
- at least one interface (8) operable by a user;
- at least one water temperature sensor (10);
- the data processing unit (7) being capable of sending drive signals to the electric motor (3), the water inlet control means (4) and the water heating means (5); the data processing unit (7) being capable of receiving response signals from the door sensor (13), the load measurement sensor (6), the interface (8) and the water temperature sensor (10);
- said food residues processing equipment being **characterized in that** it comprises:
- at least one classification list (9) of food residues stored in the data processing unit (7), and accessible and selectable by means of the interface (8); and wherein the data processing unit (7) determines at least one of the functional parameters of the electric motor (3), at least one of the functional parameters of the water inlet control means (4) and at least one of the functional parameters of the water heating means (5) based on the combination of at least the response signals of the load measurement sensor (6) and the classification selection of food residues from the classification list (9) of food residues stored in the data processing unit (7) selected by at least one user by means of the interface (8).

2. The food residues processing equipment according to claim 1, **characterized in that** the classification list (9) of food residues stored in the data processing unit (7) originates from an external server, being transmitted to the data processing unit (7) by means of its network connection unit.

3. The food residues processing equipment according to claim 1, **characterized in that** the classification list (9) of food residues stored in the data processing unit (7) originates from an external server, being transmitted to the data processing unit (7) by means of a USB memory device.

4. The food residues processing equipment according to claim 1, **characterized in that** at least one of the functional parameters of the electric motor (3) is determined by the data processing unit (7) by means of the combination between the difference between the initial weight and the final weight measured by the load measurement sensor (6) and at least one classification selection of food residues from the classification list (9) selected by at least one user by means of the interface (8).

5. The food residues processing equipment according to claim 4, **characterized in that** the operation time of the electric motor (3) is determined by the data processing unit (7) by means of the combination between the difference between the initial weight and the final weight measured by the load measurement sensor (6) and at least one classification selection of food residues from the classification list (9) selected by at least one user by means of the interface (8).

6. The food residues processing equipment according to claim 1, **characterized in that** at least one of the functional parameters of the water inlet control means (4) is determined by the data processing unit (7) by means of the combination between the difference between the initial weight and the final weight measured by the load measurement sensor (6) and at least one classification selection of food residues from the classification list (9) selected by at least one user by means of the interface (8).

7. The food residues processing equipment according to claim 6, **characterized in that** the water intake time controlled by the water inlet control means (4) is determined by the data processing unit (7) by means of the combination between the difference between the initial weight and the final weight measured by the load measurement sensor (6) and at least one classification selection of food residues from the classification list (9) selected by at least one user by means of the interface (8).

8. The food residues processing equipment according to claim 1, **characterized in that** at least one of the functional parameters of the water heating means (5) is determined by the data processing unit (7) by means of the combination between the difference between the initial weight and the final weight measured by the load measurement sensor (6) and at least one classification selection of food residues from the classification list (9) selected by at least one user by means of the interface (8).

9. The food residues processing equipment according to claim 8, **characterized in that** the temperature of the water controlled by the water heating means (5) is determined by the data processing unit (7) by means of the combination between the difference between the initial weight and the final weight measured by the load measurement sensor (6) and at least one classification selection of food residues from the classification list (9) selected by at least one user by means of the interface (8).

10. The food residues processing equipment according to claim 1, **characterized in that** at least one of the functional parameters of the electric motor (3), at least one of the functional parameters of the water inlet control means (4) and at least one of the functional parameters of the water heating means (5) are determined by the data processing unit (7) searching for the optimization of the difference between the initial weight of food residues and the final weight of food residues measured by the load measurement sensor (6).

11. A method of operating food residues processing equipment, said food residues processing equipment as defined in claim 1, **characterized in that**:
- the data processing unit (7) sends at least one control signal to the electric motor (3) based on the classification of the food residues to be digested and based on the history of **"target times" of driving the electric motor** (3) for classifying the food residues to be digested;
- the data processing unit (7) sends at least one control signal to the water inlet control means (4) based on the classification of the food residues to be digested and based on the history of "target times" of water intake controlled by the water inlet control means (4); and
- the data processing unit (7) sends at least one control signal to the water heating means (5) based on the classification of the food residues to be digested based on the history of "target temperatures" of the water controlled by the water heating means (5).

12. The method of operating food residues processing equipment according to claim 11, **characterized in that** the classification list (9) of food residues stored in the data processing unit (7) further comprises, in a relational way, the history of **"target times" of driving the electric motor** (3), the history of **"target times" of water** intake controlled by the water inlet control means (4) and the history of "target temperatures" of the water controlled by the water heating means (5) for each type or group of food residues.

13. The method of operating food residues processing equipment according to claim 12, **characterized in that** it updates the relational histories present in the classification list (9) of food residues.

14. The method of operating food residues processing equipment according to claim 13, **characterized in that**:
- it updates the history of **"target times" of driving the electric motor** (3) with the current driving time of the electric motor (3) based on detecting the optimization of the difference between the initial weight of food residues and the final weight of food residues to be digested.

15. The method of operating food residues processing equipment according to claim 14, **characterized in that** the history of **"target times" of driving the electric motor** (3) is updated locally and on at least one server external.

16. The method of operating food residues processing equipment according to claim 13, **characterized in that**:
- it updates the history of **"target times" of water intake** controlled by the water inlet control means (4) with the current driving time of the water inlet control means (4) based on the detection of the difference optimization between the initial weight of food residues and the final weight of food residues to be digested.

17. The method of operating food residues processing equipment according to claim 16, **characterized in that** the history of "target times" of water intake controlled by the water inlet control means (4) is updated locally and on at least one external server.

18. The method of operating food residues processing equipment according to claim 13, **characterized in that**:
- it updates the history of "target temperatures" of the water controlled by the water heating means (5) with the current temperature of the water controlled by the water heating means (5) based on the optimization detection of the difference between the initial weight of food residues and the final weight of food residues to be digested.

19. The method of operating food residues processing equipment according to claim 18, **characterized in that** the history of "target temperatures" of the water controlled by the water heating means (5) is updated locally and on at least one external server.

20. The method of operating food residues processing equipment according to claim 13, **characterized in that** it updates the relational histories present in the classification list (9) of food residues as soon as there is identified a current mechanical digestion rate better than the predecessor mechanical digestion rate.

21. The method of operating food residues processing equipment according to claim 20, **characterized in that** the updating of relational histories present in the classification list (9) of food residues is carried out automatically as soon as there is identified a current mechanical digestion rate better than the predecessor mechanical digestion rate.

22. The method of operating food residues processing equipment according to any one of claims 11, 12, 13, 14, 15, 16, 17, 18, 19, 20 and 21, **characterized in that** the data processing unit (7) searches for, on external servers, updates of the history of **"target times" of driving the electric motor** (3), of the history of "target times" of water intake controlled by the water inlet control means (4), and of the history of "target temperatures" of the water controlled by the water heating means (5) before sending control signals to the electric motor (3), to the water inlet control means (4) and to the water heating means (5).
